Europäisches Patentamt

European Patent Office

Office européen des brevets

(19)

(11) Numéro de publication: **0 053 556**
**B1**

(12) **FASCICULE DE BREVET EUROPEEN**

(45) Date de publication du fascicule du brevet:
**03.10.84**

(21) Numéro de dépôt: **81401883.4**

(22) Date de dépôt: **27.11.81**

(51) Int. Cl.³: **B 65 G 33/04,** F 41 F 9/06,
B 65 G 23/20

(54) Dispositif d'acheminement en courbe d'objets allongés.

(30) Priorité: **01.12.80 FR 8025442**

(43) Date de publication de la demande:
**09.06.82 Bulletin 82/23**

(45) Mention de la délivrance du brevet:
**03.10.84 Bulletin 84/40**

(84) Etats contractants désignés:
**AT CH DE FR GB IT LI NL SE**

(56) Documents cités:
**DE - C - 59 016**
**FR - A - 1 405 743**
**FR - A - 1 529 886**
**US - A - 3 153 368**

(73) Titulaire: **CREUSOT-LOIRE, 42 rue d'Anjou,**
**F-75008 Paris (FR)**

(72) Inventeur: **Voillot, Hervé, 73 Bis rue Diderot,**
**F-78500 Sartrouville (FR)**

(74) Mandataire: **Le Brusque, Maurice et al,**
**CREUSOT-LOIRE 15 rue Pasquier, F-75383 Paris**
**Cedex 08 (FR)**

ACTORUM AG

**Description**

L'invention a pour objet un dispositif d'acheminement en courbe d'objets allongés entre deux couloirs droits et s'applique spécialement à l'acheminement des munitions pour l'approvisionnement d'un canon.

Dans les tourelles d'artillerie les munitions sont acheminées depuis la soute ou un magasin jusqu'au tube par une suite de couloirs droits ou courbes. Chaque couloir droit est limité par deux paires de guides parallèles, les guides de chaque paire étant écartés d'une distance sensiblement égale à la largeur de la munition.

Ainsi, la munition est toujours guidée en deux points, d'une part à proximité du plateau de douille et d'autre part à proximité du sertissage.

Le déplacement de la munition entre les guides est souvent assuré par deux séries de plateaux à alvéoles imbriqués calés sur des arbres perpendiculaires aux guides et entraînés en rotation en synchronisme à une vitesse déterminant une vitesse linéaire constante de déplacement de la munition à l'intérieur du couloir. A cet effet, chaque plateau comporte généralement plusieurs alvéoles, par exemple quatre, qui lui donnent ainsi la forme d'une croix de Malte. Au cours de la rotation du plateau, la munition est donc prise en charge à l'intérieur de l'alvéole, qui la fait avancer et la pousse vers le plateau suivant. Les branches de la croix de Malte sont évidemment profilées de façon à prendre en charge et à repousser les munitions sans à-coups. (US-A-3153368).

Au cours du transfert de la munition de la soute au canon on peut être amené à modifier la direction du déplacement. Dans ce cas, on peut utiliser un couloir circulaire interposé entre deux couloirs droits placés respectivement en amont et à l'aval, et à l'intérieur duquel la munition change progressivement d'orientation. Par exemple, dans l'installation décrite dans le document US-A-3153368, on utilise de tels couloirs circulaires, montés sur la masse oscillante portant le canon, pour assurer le transfert des munitions et leur changement d'orientation, entre deux couloirs droits placés, l'un à l'amont à la sortie du magasin et l'autre à l'aval à l'entrée de la culasse. Un couloir, circulaire du même genre est également décrit dans le document FR-A-1405743.

Le couloir circulaire est limité, comme les couloir droits, par deux paires de guides assurant la continuité avec le couloir amont et le couloir aval respectivement du côté intérieur et du côté extérieur à la courbe.

Bien entendu, on tient compte de la forme de la munition pour faciliter son passage en courbe et c'est pourquoi, normalement, le côté intérieur est celui du sertissage et le côté extérieur celui du plateau de douille (FR-A-1405743).

Dans les dispositifs connus, le déplacement des munitions dans le couloir circulaire est réalisé par des taquets de poussée montés sur deux chaines sans fin circulaires et concentriques, espacées d'une de l'autre. Si la vitesse linéaire de la chaine intérieure peut être égale à la vitesse de déplacement de la munition dans le couloir droit, en revanche la chaine extérieure doit avoir une vitesse supérieure puisque la distance parcourue est plus grande. Il se produit donc une augmentation brusque de la vitesse de la partie arrière de la munition au moment où celle-ci passe du couloir droit au couloir courbe.

L'invention a pour objet un dispositif permettant l'acheminement progressif et sans à-coups de la munition à l'intérieur du couloir courbe en phase avec le couloir amont et le couloir aval.

Conformément à l'invention, les guides intérieurs du couloir courbe sont associés à une série de plateaux à alvéoles calés sur des arbres normaux à la courbe et décalés angulairement, lesdits plateaux étant entraînés en synchronisme avec les plateaux des couloirs droits à une vitesse déterminant une vitesse angulaire constante de changement d'orientation des munitions, et les guides extérieurs sont associés d'une part, dans la partie centrale de la courbe, à une série de plateaux à alvéoles imbriqués dont les axes sont normaux à la courbe et décalés angulairement, lesdits plateaux étant entraînés en rotation en synchronisme à une vitesse déterminant, le long du guide extérieur, une vitesse tangentielle correspondant à la vitesse angulaire constante de changement d'orientation, et d'autre part, dans les parties amont et aval de la courbe, à deux dispositifs d'entraînement à vitesse variable déterminant le long du guide extérieur, respectivement, dans la partie amont, une vitesse tangentielle croissante passant de la vitesse linéaire du couloir amont à la vitesse tangentielle du couloir courbe et dans la partie aval, une vitesse tangentielle décroissante passant de la vitesse tangentielle du couloir courbe à la vitesse linéaire du couloir aval.

Dans un mode de réalisation préférentiel, chacun des dispositifs d'entraînement à vitesse variable est contitué par une vis comprenant un filet hélicoïdal à pas variable de largeur légèrement supérieure à celle des objets, la vis étant orientée et placée à un niveau tel que le plan passant par un guide intérieur et un guide extérieur de la courbe soit tangent au fond du filet et qu'au point de tangence le plan médian du filet soit normal au guide.

Le pas du filet de la vis amont varie de façon à déterminer en fonction de la variation du rayon de la courbe le long de la vis, à l'extrémité amont une vitesse de déplacement croissant à partir de la vitesse linéaire dans le couloir amont jusqu'à une vitesse supérieure à la vitesse tangentielle correspondant à la vitesse angulaire constante, et à l'extrémité aval, une vitesse décroissant jusqu'à la vitesse tangentielle dans le couloir courbe. Le pas du filet de la vis aval varie en sens inverse depuis la vitesse tangentielle dans le couloir courbe jusqu'à la vitesse linéaire dans le couloir aval.

L'invention va maintenant être décrite, en se référant à un mode de réalisation particulier, donné à titre d'exemple et représenté sur les dessins annexés.

La figure 1 est une vue schématique en élévation du dispositif d'acheminement en courbe selon l'invention.

La figure 2 et la figure 3 sont des vues de détails à échelle agrandie d'une vis de déplacement à vitesse variable occupant deux positions successives.

La figure 4 est un diagramme des vitesses suivant l'axe de la vis.

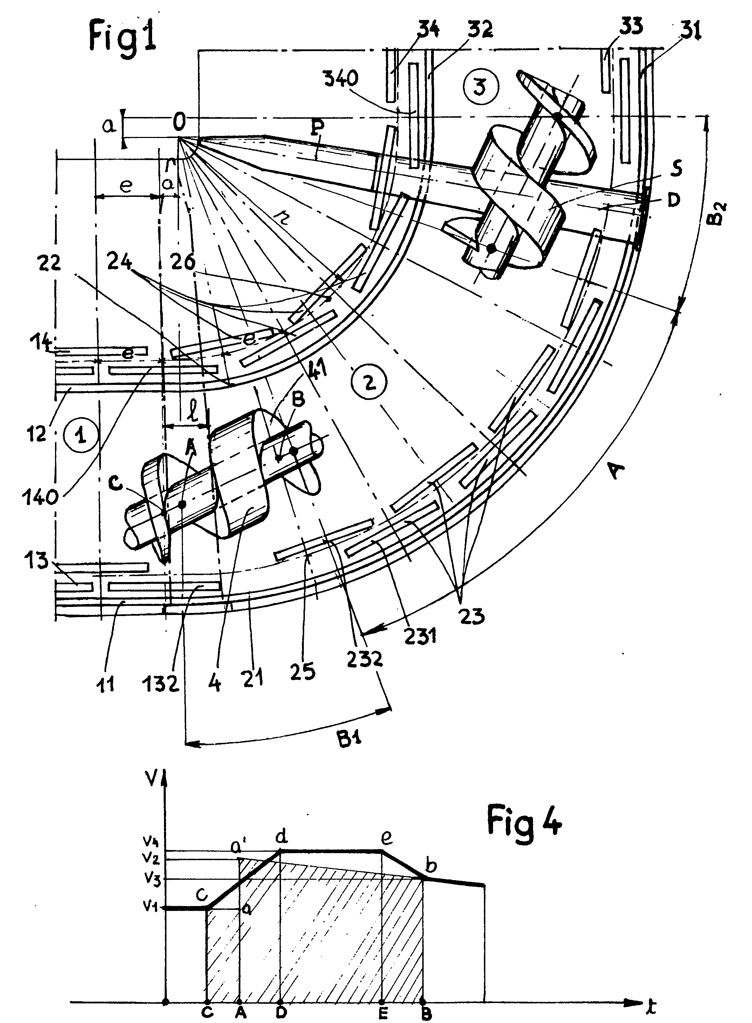

Sur la figure 1, on a représenté schématiquement un couloir droit amont 1 relié par un couloir courbe 2 à un couloir droit aval 3.

Les munitions sont amenées à partir de la soute par un puits d'accès non représenté dans lequel elles se déplacent verticalement l'une derrière l'autre, et elles sont introduites l'une à côté de l'autre dans le couloir amont (1) à l'intérieur duquel elles se déplacent parallèlement à elles-mêmes. A cet effet, elles sont guidées par deux paires de guides parallèles 11 et 12 placés respectivement du côté de plateaux de douille et du côté du sertissage, la douille étant normalement à la partie inférieure et le projectile à la partie supérieure.

Le déplacement des munitions parallèlement à elles-mêmes est déterminé par deux séries 13, 14 de plateaux à alvéoles associés respectivement aux guides 11 et 12.

Ces dispositions étant parfaitement connues, elles n'ont été représentées que très schématiquement sur la figure.

De la même façon le couloir aval 3, à l'intérieur duquel les munitions se déplacent parallèlement à leur axe horizontal, est constitué essentiellement de deux paires de guides 31, 32 associés à deux séries de plateaux 33, 34.

Dans les couloirs droits 1 et 3, les deux séries de plateaux sont entraînés en synchronisme de façon à provoquer le déplacement des munitions parallèlement à elles-mêmes et à la même vitesse linéaire proportionnelle à la vitesse de rotation des plateaux.

Lorsque ceux-ci comportent, comme habituellement, quatre alvéoles, ils tournent de 3/4 de tour par cycle.

Le couloir courbe 2 qui assure la liaison entre les couloirs droits 1 et 3 est limité par deux paires de guides courbes 21, 22 se raccordant tangentiellement aux guides rectilignes, respectivement 11 et 12 du côté amont et 31, 32 du côté aval.

Normalement, le couloir courbe 2 a une forme circulaire, les guides 21, 22 étant centrés en un point (O) situé à proximité de l'extrémité du projectile (P). En effet, la forme profilée de l'obus facilite la rotation autour de ce point.

Dans les couloirs amont et aval, la munition se déplace linéairement d'une distance (e) à chaque tiers de cycle, Selon une caractéristique de l'invention, les guides intérieurs 11 sont associés à une série de plateaux à alvéoles 24 qui sont régulièrement décalés angulairement de façon que leurs axes passent par le point (O) et soient par conséquent normaux au guide 22 et que les centres des plateaux soient en outre décalés angulairement d'un arc de cercle de longueur sensiblement égale à (e). D'autre part, le centre (O) du couloir courbe (1) est placé de préférence à une distance (a) des axes du dernier plateau 140 du couloir amont et du premier plateaux 340 du couloir aval, la distance (a) correspondant à la position où la munition se dégage des plateaux 140 et 132. Ainsi les couloirs amont 1 et aval 3 sont prolongés de la distance (a) au-delà de l'axe de leurs plateaux extrêmes.

Les plateaux intérieurs 24 du couloir courbe sont entraînés en synchronisme avec les plateaux 14 et 34 des couloirs droits et l'on voit que, grâce à l'ensemble des dispositions adoptées, la munition peut être acheminée progressivement et sans à-coup, du couloir 1 et du couloir 3, au moins du côté intérieur, c'est-à-dire du côté du sertissage.

Bien entendu, la même disposition ne peut pas être adoptée du côté des guides extérieurs 21 puisque la munition doit parcourir une distance plus grande dans le même temps.

Selon une seconde caractéristique de l'invention, le couloir courbe est divisé à cet effet en trois parties.

Dans la partie centrale A, le changement d'orientation de la munition est assurée avec une vitesse angulaire constante. Cette vitesse angulaire est celle qui est déterminée par les plateaux 24 tournant en synchronisme avec les plateaux 14 et 34, c'est-à-dire de 3/4 de tour par cycle.

Le déplacement de la munition du côté douille est donc assuré par une série de plateaux à alvéoles 23 qui doivent être entraînés en rotation à une vitesse assurant la vitesse tangentielle correspondant à la vitesse angulaire constante recherchée et qui dépend par conséquent du rayon de la courbe à la hauteur des plateaux.

De la même façon que les plateaux 24 associés aux guides intérieurs 22, les plateaux 23 sont décalés angulairement de telle sorte que leurs axes passent le centre (O) de la courbe et qu'ils soient par conséquent normaux aux guides 21.

De préférence les plateaux seront disposés de part et d'autre d'une ligne moyenne 25 ayant un rayon double de la ligne moyenne 26 des plateaux 24. Ainsi, la vitesse tangentielle le long des plateaux sera-telle double de la vitesse tangentielle le long de la ligne 26 qui est elle-même égale à la vitesse linéaire de déplacement dans les couloirs 1 et 3. Les plateaux 23 pourront avoir une forme identique à celle des plateaux 24 et se trouveront en nombre double de celui des plateaux 24 correspondant au même secteur angulaire. Ainsi, la série de plateaux extérieurs 23 comprendra d'une part, des plateaux 231 coaxiaux avec les plateaux intérieurs 24 et d'autre part des plateaux 232 dont les axes seront dirigés suivant les bissectrices des angles formés par les axes des plateaux 24.

La longueur de l'arc moyen 25 étant double de celle de l'arc 26, les plateaux 23 seront entraînés en rotation en synchronisme de façon à tourner de 1,5 tour par cycle pour déterminer la vitesse angulaire voulue.

Grâce à la disposition qui vient d'être décrite, on assurera un changement d'orientation progressif et sans à-coup de la munition dans la partie centrale A de la courbe.

Cependant, dans les parties extrêmes B1 et B2 de la courbe, de part et d'autre de la partie A, il sera nécessaire d'assurer le déplacement de la munition du côté douille à une vitesse croissante dans la partie B1 et décroissante dans la partie B2.

En effet, dans la partie B1, l'extrémité du côté douille qui était entraînée par les plateaux 13 à une vitesse linéaire constante lui faisant parcourir la distance (e) à chaque tiers de cycle devra passer à une vitesse tangentielle double provoquée par les plateaux 25. De même dans la partie B2, la vitesse tangentielle de la munition du côté douille doit décroître progressivement jusqu'à une vitesse linéaire moitié déterminée par les plateaux 33 du couloir 3.

La liaison entre les plateaux 13 du couloir amont et les plateaux 23 de la partie A doit donc être assurée par un dispositif permettant d'accélérer progressivement l'extrémité douille de la munition, et inversement de la décélérer entre la partie A et le couloir aval 3.

On pourrait imaginer divers dispositifs plus ou moins compliqués pour prendre en charge la munition dans les parties B1 et B2 et lui donner un mouvement uniformément accéléré ou décéléré. Cependant, dans un dispositif de ce genre, il est avantageux d'utiliser des organes purement mécaniques, et à cet effet, selon une caractéristique préférentielle de l'invention, on utilise des vis à pas variables 4 et 5 représentées schématiquement sur la figure 1.

L'utilisation d'un pas variable permet en effet d'assurer de façon très simple l'accélération voulue. D'autre part, il est possible, comme on l'a représenté de donner à chaque vis un filet de largeur (1) légèrement supérieure à la largeur des douilles D et d'orienter la vis de telle sorte que d'une part, le fond du filet soit sensiblement tangent au plan passant par les deux guides 11 et 12, le long duquel se déplacent les munitions et que d'autre part, au point de tangence, le plan médian du filet passe sensiblement par le centre (0) de la courbe.

On voit sur la figure 1 que cette condition peut être réalisée si l'on oriente les vis 4 et 5 de façon que leurs axes soient inclinés par rapport aux axes des couloirs 1 et 3 et sensiblement perpendiculaires aux axes des plateaux de la série 24 placé aux extrémités du secteur A.

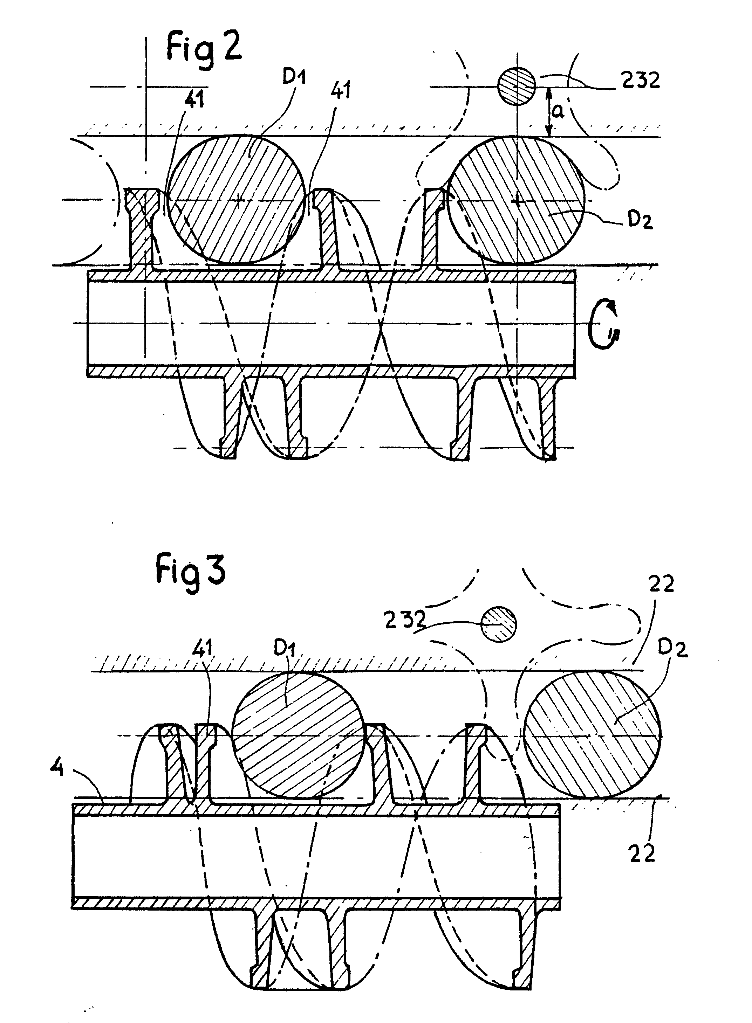

La vis amont 4 a été représentée à échelle agrandie sur les figures 2 et 3 qui sont des coupes longitudinales suivant l'axe de la vis et sur lesquelles on a représenté en traits mixtes le premier plateau 232 de la série 23.

Le pas de la vis est calculé de telle sorte que le déplacement de la munition soit en phase à l'entrée et à la sortie de la vis avec les plateaux adjacents et que les accélérations et décélérations du mouvement aient des valeurs finies acceptables. Compte-tenu de l'inclinaison que l'on doit donner au filet pour obtenir l'orientation souhaitée, ce résultat peut être obtenu si l'on entraîne la vis par exemple à une vitesse de rotation de trois tours par cycle. On voit par exemple sur les figures 2 et 3 deux positions successives de la vis et du plateau 232 après rotation d'un quart de tour de la vis à laquelle correspond une rotation de 1/8 de tour du plateau 232 et de 1/16 de tour du dernier plateau 132 de la série 13.

Dans la position de la figure 2, la munition D1 qui vient du couloir amont quitte le plateau 132 pour être prise en charge par le filet 41 de la vis. En revanche, dans la même position, le plateau 232 prend en charge la munition D2 qui arrive à l'extrémité de la vis.

Dans la position de la figure 3, la munition D1 est poussée uniquement par le filet 41 de la vis 4 alors que la munition D2 a quitté la vis et est poussée le long des guides 22 par le plateau 232.

La figure 4 représente le diagramme des vitesses linéaires suivant l'axe de la vis, le temps étant indiqué en abscisse et la vitesse en ordonnée.

La prise en charge par la vis 4 commence sensiblement à la hauteur de l'axe du dernier plateau 132 du couloir 1. Cependant, comme on l'a indiqué, le couloir est prolongé au-delà de cet axe d'une distance (a). C'est donc à cet endroit, qui correspond au point A de la vis, que la vitesse de déplacement de la munition (égale à la vitesse linéaire V1 dans le couloir 1) devrait passer brusquement à la vitesse tangentielle V2 qui correspond, en fonction du rayon OA de la courbe, à la vitesse angulaire constante correspondant elle-même le long de la ligne intérieure 26 à la vitesse V1. On a donc $V_2 = V_1 \cdot OA/r$,(r) étant le rayon de la ligne médiane 26 de la série de plateaux 24.

Au point B de la vis à partir duquel la munition est prise en charge par le premier plateau 232 de la série 23, la vitesse linéaire de déplacement devrait être $V_3 = V_1 \cdot OB/r$.

Pour éviter le changement brusque de vitesse de $V_1$ à $V_2$, on fait prendre en charge la munition par la vis à partir d'un point C situé en amont de A. Le pas de vis est déterminé de telle sorte que la vitesse augmente progressivement jusqu'à une valeur $V_4$ qui est maintenue dans la partie centrale de la vis, entre les points D et E, la vitesse linéaire décroissant progressivement de $V_4$ à $V_3$ entre les points E et B.

Pour que le déplacement de la vis s'effectue à la vitesse angulaire constante, c'est-à-dire que la partie arrière de la munition se déplace de l'arc $B_1$ il est nécessaire que l'aire du polygone C,c,d,e,b,B soit égale à l'aire du polygone c,c,a,a',b,B. Pour cela il faut que le point C soit situé en amont du point A et que la vitesse $V_4$ soit supérieure à $V_2$.

Bien entendu, on peut faire varier la longueur du segment horizontal DE correspondant au déplacement à vitesse constante $V_4$.

On a ainsi un moyen de détermination par le calcul du pas à donner à la vis compte-tenu de l'orientation donnée à son axe.

La vis 5 réalise de façon inverse le passage de la vitesse tangentielle à la vitesse linéaire dans le couloir aval 3 et a donc un profil symétrique de celui de la vis 4. Par ailleurs, comme on l'a représenté sur la figure 1 les vis 4 et 5 peuvent se placer d'un côté ou de l'autre du plan médian du couloir, de même que les plateaux à alvéoles puisque leur seul rôle est de faire glisser les munitions le long du couloir.

D'une façon générale, la disposition des vis et leur mode d'entraînement seront étudiés en fonction des possibilités d'encombrement des différents organes mécaniques que l'on désire utiliser.

On conçoit d'autre part que, si l'utilisation de vis à pas variable est avantageuse, d'autres dispositifs, commandés par exemple par des cames, pourraient être utilisés, pour passer du couloir droit à la partie centrale du couloir courbe et inversement.

D'ailleurs, d'une façon générale, l'invention ne se limite pas aux détails du mode de réalisation qui a été décrit, bien des variantes pouvant être imaginées.


**Revendications**

1. Dispositif d'acheminement en courbe d'objets allongés (D) entre deux couloirs droits, respectivement amont (1) et aval (3), d'orientations différentes, reliés par un couloir de liaison courbe, chaque couloir droit (1,3) étant constitué de deux paires de guides parallèles (11,12) (31, 32) entre lesquels sont acheminés les objets (D) par déplacement successifs au moyen de deux séries (13, 14, 33, 34) de plateaux à alvéoles imbriqués calés sur des arbres perpendiculaires aux guides et entraînés en rotation en synchronisme à une vitesse déterminant une vitesse linéaire constante de déplacement des objets, le couloir de liaison courbe (2) étant limité par deux paires de guides (21, 22) assurant la continuité du guidage du couloir amont (1) au couloir aval (3) respectivement du côté intérieur et du côté extérieur à la courbe, caractérisé par le fait que les guides intérieurs (22) du couloir courbe (2) sont associés à une série (24) de plateaux à alvéoles calés sur des arbres normaux à la courbe et décalés angulairement, lesdits plateaux (24) étant entraînés en synchronisme avec les plateaux (14) et (34) des couloirs droits (1) et (3) à une vitesse déterminant une vitesse angulaire constante de changement d'orientation des objets et que les guides extérieurs (21) sont associés d'une part, dans la partie centrale (a) de la courbe, à une série (23) de plateaux à alvéoles imbriqués dont les axes sont normaux à la courbe et décalés angulairement, lesdits plateaux (23) étant entraînés en rotation en synchronisme à une vitesse déterminant le long du guide extérieur (21) une vitesse tangentielle correspondant à la vitesse angulaire constante de changement d'orientation et d'autre part, dans les parties amont (B1) et aval (B2) de la courbe, à deux dispositifs d'entraînement à vitesse variable (4) et (5) déterminant le long du guide extérieur (21) respectivement dans la partie amont (B1) une vitesse tangentielle croissant de la vitesse linéaire du couloir amont (1) à la vitesse tangentielle du couloir courbe (3) et dans la partie aval (B2) une vitesse tangentielle décroissant de la vitesse tangentielle du couloir courbe (2) à la vitesse linéaire du couloir aval (3).

2. Dispositif d'acheminement selon la revendication 1, caractérisé par le fait que chacun des dispotifs d'entraînement à vitesse variable est contitué par une vis (4,5) comprenant un filet hélicoïdal (41) à pas variable de largeur (1) légèrement supérieure à celle des objets, la vis étant orientée et placée à niveau tel que le plan passant par un guide intérieur (22) et un guide extérieur (21) du couloir courbe (2) soit sensiblement tangent au fond du filet (41) et qu'au point de tangence le plan médian du filet soit normal aux guides (21,41).

3. Dispositif d'acheminement selon la revendication 2 caractérisé par le fait que le pas du filet (41) de la vis amont (4) varie de façon à déterminer en fonction de la variation du rayon de la courbe le long de la vis à l'extrémité amont une vitesse de déplacement croissant à partir de la vitesse linéaire (V1) dans le couloir amont (1) jusqu'à une vitesse (V4) supérieure à la vitesse tangentielle (V2) correspondant à la vitesse angulaire constante et, à l'extrémité aval une vitesse décroissant jusqu'à vitesse tangentielle (V3) dans le couloir courbe (3), et que le pas du filet de la vis aval (5) varie en sens inverse depuis la vitesse tangentielle dans le couloir courbe jusqu'à la vitesse linéaire dans le couloir aval (3).

## Patentansprüche

1. Vorrichtung zur Beförderung von länglichen Gegenständen (D) in einer Kurve bzw. Krümmung bzw. gekrümmten Bahn von zwischen zwei geradeverlaufenden Gängen, die in Bewegungsrichtung stromaufwärts (1) bzw. stromabwärts (3) gelegen sind, unterschiedlicher Orientierung, die durch einen gekrümmten Verbidungsgang bzw. -durchgang verbunden sind, wobei jeder geradeverlaufende Gang (1,3)aus zwei Paaren paralleler Führungen (11,12) (31,32) besteht, zwischen denen die Gegenstände (D) durch aufeinanderfolgende Verschiebungen zweier Reihen (13,14,33,34) von dachziegelartig angeordneten mittels zweier Reihen (13, 14, 33, 34) von übereinandergreifend bzw. überlappend angeordneten Scheiben mit Ausnehmungen befördert werden, die auf normal zu den Führungen liegenden Wellen befestigt sind und synchron mit einer Geschwindigkeit in Rotation versetzt werden, die eine konstante, lineare Verschiebegeschwindigkeit der Gegenstände bestimmt, wobei der gekrümmte Verbindungsgang (2) von zwei Paaren von Führungen (21, 22) begrenzt ist, die die Kontinuität der Führung im stromaufwärts gelegenen Gang (1) zum stromabwärts gelegenen Gang (3) an der Innen-bzw. Aussenseite der Krümmung gewährleisten, dadurch gekennzeichnet, dass die inneren Führungen (22) des gekrümmten Ganges (2) einer Reihe (24) von Scheiben mit Ausnehmungen zugeordnet sind, die auf normal zur Krümmung verlaufenden Wellen befestigt sind und winkelmässig versetzt sind, wobei die Scheiben (24) synchron mit den Scheiben (14) und (34) der geradeverlaufenden Gänge (1) und (3) mit einer Geschwindigkeit in Bewegung gesetzt sind, die eine konstante Winkelgeschwindigkeit der Orientierungssänderung der Gegenstände bestimmt, und wobei die äusseren Führungen (21) einerseits im Mittelstück (A) der Krümmung einer Reihe (23) von übereinandergreifend bzw. überlappend angeordneten Scheiben mit Ausnehmungen zugeordnet sind, deren Achsen normal zu der Krümmung verlaufen und die winkelförmig versetzt sind, wobei die Scheiben (23) synchron mit einer Geschwindigkeit in Rotation gesetzt sind, die entlang der äusseren Führung (21) eine Tangentialgeschwindigkeit bestimmt, die der konstanten Winkelgeschwindigkeit der Orientierungsänderung entspricht, und andererseits im stromaufwärts gelegenen Teil (B1) und im stromabwärts gelegen Teil (B2) der Krümmung zwei Antriebsvorrichtungen (4,5) mit variabler Geschwindigkeit zugeordnet sind, welche entlang der äusseren Führung (21) im stromaufwärts gelegenen Teil (B1) eine Tangentialgeschwindigkeit, die von der linearen Geschwindigkeit des stromaufwärts gelegenen Ganges (1) auf die Tangentialgeschwindigkeit des gekrümmten Ganges (2) anwächst bzw. im stromabwärts gelegenen Teil (B2) eine Tangentialgeschwindigkeit, die von der Tangentialgeschwindigkeit des gekrümmten Ganges (2) auf die lineare Geschwindigkeit des stromabwärts gelegenen Ganges (3) abnimmt, bestimmen.

2. Vorrichtung zum Befördern nach Anspruch 1, dadurch gekennzeichnet, dass jede der Antriebsvorrichtungen mit variabler Geschwindigkeit von einer Schraube bzw. Schnecke (4,5) gebildet ist, die ein schraubenförmiges Gewinde (41) mit variabler Steigung bzw. Ganghöhe aufweits, die etwas breiter bwz. grösser ist als die Breite der Gegenstände, wobei die Schraube so orientiert und in einer waagrechten Fläche bzw. auf einem Niveau so angeordnet ist, dass die Ebene, welche durch eine innere Führung (22) und eine äussere Führung (21) des gekrümmten Durchganges (2) verläuft, im wesentlichen tagential zum Ende des schraubenförmigen Gewindes (41) ist und dass im Berührungspunkt die Mittelebene des Gewindes normal zu den Führungen (21,22) steht.

3. Vorrichtung zum Befördern nach Anspruch 2, dadurch gekennzeichnet, dass die Steigung bzw. Ganghöhe des Gewindes (41) der stromaufwärts gelegenen Schraube (4) sich derart verändert, dass sie in Abhängigkeit von der Änderung des Krümmungsradius entlang der Schraube am stromaufwärts gelegenen Ende eine Verschiebegeschwindigkeit bestimmt, die von der linearen Geschwindigkeit (V1) im stromaufwärts gelegenen Gang (1) bis auf eine Geschwindigkeit (V4) anwächst, die über der Tangentialgeschwindigkeit (V2) liegt, die der konstanten Winkelgeschwindigkeit entspricht, und am stromabwärts gelegenen Ende eine bis zur Tangentialgeschwindigkeit (V3) im gekrümmten Gang (2) abnehmende Geschwindigkeit bestimmt, und dass die Steigung bzw. Ganghöhe der stromabwärts gelegenen Schraube (5) sich im ungekehrten Sinn von der Tangentialgeschwindigkeit im gekrümmten Gang bis auf die lienare Geschwindigkeit im stromabwärts gelegenen Gang (3) verändert.

**Claims**

1. Device for conveying elongate objects (D) over a curved path between two straight corridors, of which one (1) is upstream and the other (3) downstream and which have different orientations and are connected by a curved communication corridor, each straight corridor (1,3) being composed of two pairs of parallel guides (11,12) (31,32), between which the objects (D) are conveyed by succesive displacements by means of two series (13,14, 33,34) of imbricated socketed plates fastened on shafts perpendicular to the guides and driven rotationally in synchronism at a speed determining a constant linear speed of displacement of the objects, the curved communication corridor (2) being bounded by two pairs of guides (21,22) establishing continuity of guidance from the upstream corridor (1) to the downstream corridor (3) respectively on the inner and outer sides of the curve, characterised by the fact that the inner guides (22) of the curved corridor (2) are associated with a series (24) of socketed plates fastened on shafts normal to the curve and angularly offset, the said plates (24) being driven in synchronism with the plates (14) and (34) of the straight corridors (1) and (3) at a speed determining a constant angular speed of change of orientation of the objects, and that the outer guides (21) are associated on the one hand, in the central part (A) of the curve, with a series (23) of imbricated socketed plates whose axes are normal to the curve and angularly offset, the said plates (23) being driven rotationally in synchronism at a speed determining, along the outer guide (21), a tangential speed corresponding to the constant angular speed of change of orientation and on the other hand, in the upstream part (B1) and downstream part (B2) of the curve, with two variable-speed drive devices (4) and (5) determining, along the outer guide (21), respectively in the upstream part (B1) a tangential speed increasing from the linear speed of the upstream corridor (1) to the tangential speed of the curved corridor (2) and in the downstream part (B2) a tangential speed decreasing from the tangential speed of the curved corridor (2) to the linear speed of the downstream corridor (3).

2. Conveying device according to Claim 1, characterised by the fact that each of the variable-speed drive devices is composed of a screw (4,5) comprising a variable-pitch helicoidal thread (41) of a width (1) slightly greater than that of the objects, the screw being oriented and situated at a level such that the plane passing through an inner guide (22) and an outer guide (21) of the curved corridor (2) is substantially tangent to the bottom of the thread (41), and that at the tangential point the median plane of the thread is normal to the guides (21,41).

3. Conveying device according to Claim 2, characterised by the fact that the pitch of the thread (41) of the upstream screw (4) varies in such a manner as to determine, in dependence on the variation of the radius of the curve along the screw, at the upstream end, a speed of displacement increasing from the linear speed (V1) in the upstream corridor (1) to a speed (V4) higher than the tangential speed (V2) corresponding to the constant angular speed and, at the downstream end, a speed decreasing to the tangential speed (V3) in the curved corridor (2), and that the pitch of the thread of the downstream screw (5) varies inversely from the tangential speed in the curved corridor to the linear speed in the downstream corridor (3).

# Fig 1

# Fig 4

Fig 2

Fig 3